# EUROPEAN PATENT APPLICATION

(11) **EP 1 838 033 A1**
(43) Date of publication of application: **26.09.2007**
(21) Application number: 07251223.9
(22) Date of filing: 22.03.2007
(51) Int. Cl.: H04L 12/14, H04L 12/58

(54) **Telecommunications services apparatus and method**

(30) Priority: 24.03.2006 GB 0605937
(71) Applicant: INTELLPROP LIMITED, Guernsey, Channel Islands (GB)
(72) Inventor: Wilson, Jeffrey, Fareham Hampshire PO16 7OH (GB)
(74) Representative: Lewis, Darren John

(57) **Abstract**

A telecommunications services apparatus. The apparatus comprises a message grooming means and a message aggregation means. The message grooming means is operable to receive a message from a message originator and to determine whether or not the message should be free of charge to the originator based on an analysis of a destination address of the message. If it is determined that the received message should be free of charge to the originator, the message grooming means directs the message to the message aggregation means. The message aggregation means is operable to receive the message from the message grooming means, to determine from the message destination address a corresponding delivery address for the message, to create a charging information record such that the intended message recipient may subsequently be charged for communication of the message, and to initiate message delivery to the determined delivery address. The message may therefore be delivered at the expense of recipient, rather than the originator, thereby mirroring the free-phone / toll-free feature of voice communications in a message communication environment.

## Description

### BACKGROUND ART

The invention relates to telephone networks and in particular to the provision of messaging facilities that are free of charge to the originator.

Freephone telephone services are a well understood concept. Whereas generally for a conventional telephone call the calling party pays the full cost of the call, in the case of a freephone number the called party pays for the trunk element of the call or all costs of the call.

In the UK the freephone code 0800 is now well known as a freephone prefix and other codes are also in use, 0500 in the United Kingdom and 1-800 as well as 1-888 in the USA. In this specification, further references to '0800' are intended to include equivalent alternative 'free' prefixes.

The main purpose of a freephone number is to encourage approaches or responses from potential customers, as they will be aware that the call will be free. As such, freephone has been a successful service and in particular is used by many large companies.

In the USA, freephone numbers can be particularly attractive due to the presence of letters on the keys as it is possible to market numbers such as 1800HOTELS1 and 1800MATTRES(S).

The way in which freephone voice services are implemented varies from country to country, but as the most important customers can potentially generate large numbers of calls, the freephone service is often provided by a form of network topology referred to as the Intelligent Network.

Typically, a business wishing to start offering a freephone number will enter into a contract for either a chosen or given number for a period, with a monthly fee and, of course, an undertaking to pay the telephone company's call charges for the freephone calls received. If the customer is a particularly large user the telephone network will frequently install special lines connected directly or indirectly to its intelligent network freephone system. However, for moderate users of the system a telephone operator will typically use a technique called "delivery to number", wherein the freephone call will be routed to one of the customer's existing telephone lines.

A benefit of the use of Freephone numbers is that there are many existing numbers that have been well publicised. In the UK for example, the number 0800 404040 has been in use by a well-known hotel chain for a long period of time and is well known. Such freephone numbers could be made available for use by people who would prefer to text to the number rather than call without requiring any additional publicity, but until now this has not been possible.

The offering of a Freephone number by an organisation confers a certain status which is part of the company's image and branding. The concept of freephone adds value because the freephone number, especially if it is a memorable or 'vanity' number, may already be known to potential users. In many networks it is also possible to 'overdial', that is to dial additional redundant digits on the end of a number, without causing the call set-up to fail. Therefore it is possible to advertise a number such as 0800 PANASONIC, which while being longer than the actual underlying number, still has the same effect when dialled using the letter assignments on a telephone keypad. Such so-called vanity numbers are very powerful because they can be easily retained in a customer's mind.

Although the prior art is well established for voice Freephone services, the same is not true for messaging. Messaging communications, in the context of this description, refer to text messages (e.g. SMS (Short Message Service), EMS (Enhanced Message Service)), Multimedia messages (MMS) and video messages both with and without associated audio. These types of messages are typically originated from mobile network terminals, but increasingly with the integration of disparate network types, messaging is becoming more transport-independent, and can be sent between networks and terminals of various technologies and protocols.

Today there is no established 'free-text' service to mirror the success of freephone. Partly this is due to the characteristics of SMS, being the original and most successful form of telephone messaging, which does not support the inter-network accounting and charging models that have been developed for voice traffic. Whereas voice calls are always routed to the network that owns the destination number range, the same is not true for text messages. Consequently, charging for text messaging has been less flexible than charging for voice. In many cases a terminating network charges a fee to the originating network for delivering a text message, but in some of the more complex charging scenarios, such as from roamer to roamer where the subscriber's home network never even sees the message transit, such termination charges are waived. The complexity of charging for inter-network messages has therefore hindered the introduction of a free-text service.

Another factor that has prevented the adoption of free-text is the lack of an established number range or prefix, analogous to 0800 for voice, that is recognisable as free for the user. This is because in most countries mobile number ranges and fixed number ranges have been conceived as distinct, and so free numbers from fixed networks have not been available for use as mobile destinations. Since text messages were originally invariably addressed to a mobile destination number, this precluded the use of 0800 as a mobile destination prefix.

Mobile networks also embraced the concept of the short code, a short number of typically 6 digits or less, for accessing network services, interactive events and the purchase of services such as ringtones. Due to the relatively small number of available short codes compared to long numbers, their usage has been in many cases unstructured and chaotic, with no means to readily identify the charging band of a given short code. Furthermore, where multiple networks operate in a region, short code functions are often not allocated in common between the networks. As a result of these factors, it is impractical to allocate blocks of shortcodes to free-text in a way that is clear to subscribers.

A problem with free services is that they can be subject to abuse. The problem is evident with email, which is free for the sender and suffers from large amounts of spam, and with 'click-fraud' where malicious clicks are made on the sites that pay for a customer's 'click'. Some companies have installed systems for barring, by means of a blacklist, persistent misusers of their call centres by spotting such callers on the basis of CLI (calling line identity), and also by rejecting calls that do not have a CLI. The problem is not evident with normal person to person text messaging, because the sender is normally charged, and mobile spam typically only arises where foreign operators fraudulently fake their identity in order to avoid charges. Freephone voice services can be subject to abuse, and the recipient may have no control over the number of free calls that are made to their 0800 number, resulting in unwanted charges.

### SUMMARY OF THE INVENTION

According to a first aspect of the invention there is provided a telecommunications services apparatus comprising a message grooming means (router) operable to select by analysis of the destination address a message that should be free of charge to the originator and to direct said message to a message aggregation means operable to receive such messages from one or more message grooming means in one or more networks, to determine from the message destination address a corresponding delivery address for the message, to create a charging information record such that the intended message recipient may be charged for delivery of the message, and to initiate message delivery to the determined address, wherein the message delivery is free of charge to the originator.

According to a second aspect of the invention there is provided a telecommunications services apparatus comprising a message grooming means operable to select by analysis of the destination address a message that should be free of charge to the originator and to direct said message to a message aggregation means operable to receive such messages from one or more message grooming means in one or more networks, to determine from the message destination address a corresponding delivery address for the message, to determine whether predefined usage criteria are satisfied by the message, and if so to create a charging information record such that the intended message recipient may be charged for delivery of the message, and to initiate message delivery to the determined address, wherein the message delivery is free of charge to the originator.

According to a third aspect of the invention there is provided a telecommunications services system comprising means for a message originator to send a message free of charge to a message destination address, wherein the free of charge nature of the communication is indicated by a characteristic of the destination address provided by the originator and wherein the system translates the destination address to an address suitable for delivery of the communication to the intended destination and provides a mechanism for charging the recipient for the message.

According to a fourth aspect of the invention there is provided a telecommunications services system comprising means for a message originator to send a message free of charge to a message destination address, wherein the free of charge nature of the communication is indicated by a characteristic of the destination address provided by the originator and wherein the system translates the destination address to an address suitable for delivery of the communication to the intended destination and provides a mechanism for charging the recipient for the message, wherein message delivery and charging can be limited so as to not exceed a predetermined maximum number of chargeable deliveries per time period, or so as to limit misuse by senders.

According to a fifth aspect of the invention there is provided a telecommunications services method comprising analysis of the destination address of a message that should be free of charge to the originator and the direction of said message to a message aggregator, receiving such messages from one or more networks, determining from the message destination address a corresponding delivery address for the message, creating a charging information record such that the intended message recipient may be charged for delivery of the message, and initiating message delivery to the determined address, wherein the message delivery is made free of charge to the originator.

According to a sixth aspect of the invention there is provided a telecommunications services, method comprising analysis of the destination address of a message that should be free of charge to the originator and the direction of said message to a message aggregator, receiving such messages from one or more networks, determining from the message destination address a corresponding delivery address for the message, determining that predefined usage criteria are satisfied by the message, creating a charging information record such that the intended message recipient may be charged for delivery of the message, and initiating message delivery to the determined address, wherein the message delivery is made free of charge to the originator.

According to a seventh aspect of the invention, a modified destination address indicates that a message should be charged, but delivered to the same organisation as is associated with the unmodified address, permitting message access to said destination even when a free message service is not implemented or temporarily unavailable.

### BRIEF DESCRIPTION OF THE DRAWINGS

For a better understanding of the invention and to show how the same may be carried into effect reference is now made by way of example to the accompanying drawings in which:
Figure 1 schematically shows a telephone network including a telephone services apparatus according to an embodiment of the invention;
Figure 2 schematically shows a telephone network including a telephone services apparatus according to another embodiment of the invention; and
Figure 3 schematically shows a message aggregator according to embodiments of the invention.

### DETAILED DESCRIPTION

The invention will now be described by way of example with reference to the accompanying drawings, throughout which like parts are referred to by like references.

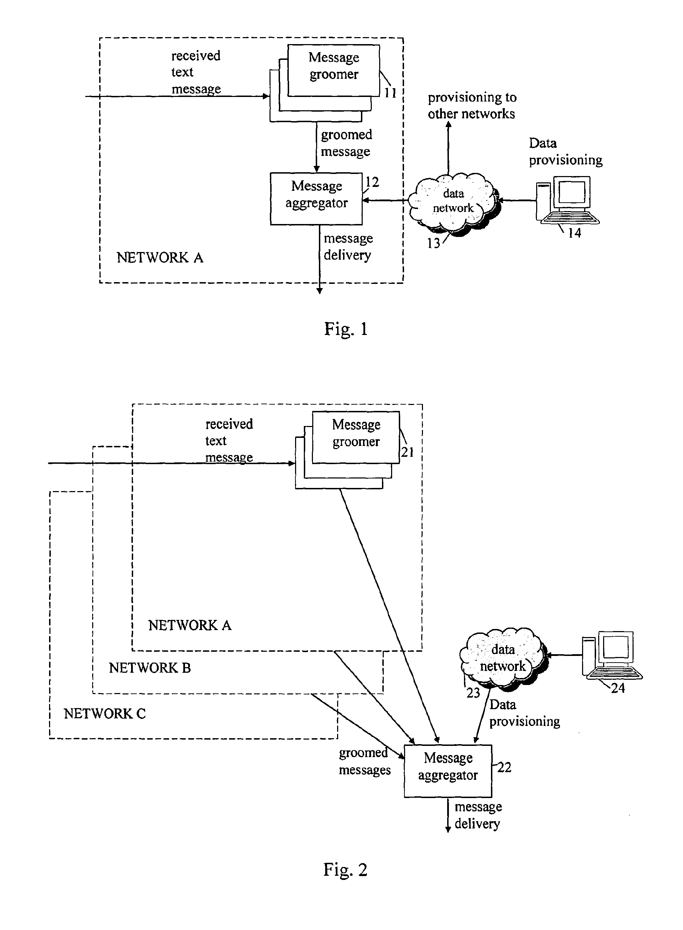

Figure 1 shows messages being received by one of a number of message groomers 11 in a single network. Selected messages matching a free-of-charge destination address are groomed to a message aggregator 12 within the network. The aggregator is provisioned with data via a data network 13 preferably from a centralised provisioning system 14 such as might be operated by a service provider or other third party, which provides information about address translation for message delivery and also about message rate limits or originator blacklisting. The provisioning system can provision data to multiple networks that operate independent freetext delivery systems. A message may then be delivered from the message aggregator 12 to the translated destination address, e.g. by delivery to a mobile telephone number, delivery to email, delivery by voice using speech synthesis, delivery to a host application.

Figure 2 shows a similar arrangement except that the aggregator 22 is now shared by multiple networks, and is for example operated by a service provider or other third party. Thus the arrangement shown in Figure 2 includes a number of message groomers 21 in each network. The groomers groom messages to the message aggregator 22. The aggregator 22 is provisioned with data via a data network 23 preferably from a centralised provisioning system 24.

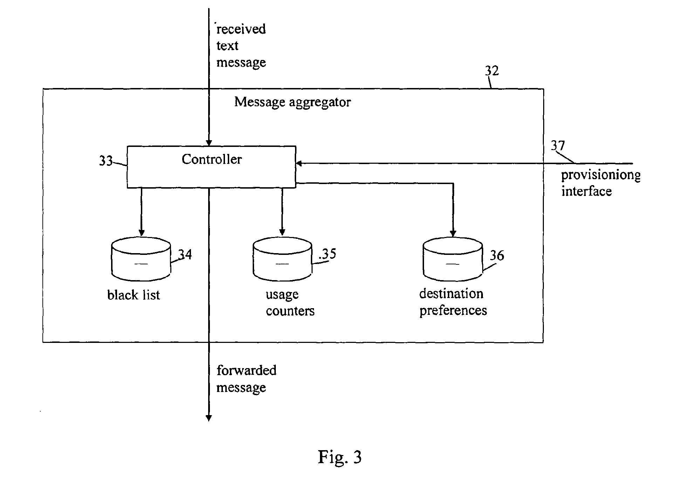

Fig 3 shows the aggregator 22 of Figure 2 in more detail. A controller 33 receives provisioning information over an interface 37 and stores provisioned data in a table or database 36 representing the requirements of the end customer with respect to charging or usage limits. Either automatic of manually configured blacklisting of unwanted message originators may be implemented using a table or database 34 which stores the originating MSISDNs (mobile subscriber ISDN numbers). As message traffic passes through the aggregator, usage statistics are gathered in a table or database 35 on a per-destination basis. The controller can block or reject messages based on the contents of these data stores.

It is an aim of the present invention to enable free messaging services to be adopted on modem mobile and fixed networks, alongside the successful voice equivalents, preferably using the same 800-based numbering schemes that are familiar to telephone users as being free of charge, while also providing a solution to the liability to abuse and fraud to which the recipients of 0800 communications are presently exposed.

A key advantage of the present invention is that it allows the widely known concept of `800' (e.g. 0800 or functionally equivalent) numbers to be as applied to text messaging, while also providing a mechanism to control the usage of the system, by limiting throughput so suit recipients' self-imposed cost or rate limits, and/or by blacklisting misusers of the system.

A further key distinction of the invention with respect to voice freephone, is that whereas with voice, the originating operator has to route the call according to which network owns the dialled number, a process requiring complex number analysis, in the text case described by the present invention, the routing is independent of the number owner and is always to the aggregator. This makes the processing of text messages to free destinations relatively straightforward for the network operator. The aggregator may serve all of the message groomers in one network, or may service multiple networks. In the multiple network case, the aggregator would preferably be operated by an independent service provider. In the case shown in Figure 1, the message aggregation is per-network, and translation to a final destination address is done by the aggregator in each network rather than in disparate switches all over the network, which reduces the network's data-build complexity. In the case shown in Figure 2, aggregation is done centrally on behalf of multiple networks.

Many companies have invested money and advertising into special 0800 numbers, which have become associated with their company or brand, are published in directories and on signage and which the companies would also like to use for text and other types of incoming messaging. Furthermore, telephone users are familiar with the concept of 0800 numbers being free, and will in most cases naturally assume without any training, that if an 0800 number is advertised for a text service that it will also be free.

For a preferred implementation of the invention for SMS text messages in the GSM system, the invention uses the well-known concept of placing SMS Routers in the mobile originated message path between the MSC (message service centre) and SMSC (short message service centre). This allows all MO (mobile originating) traffic from the network's subscribers to pass through the SMS Routers, which can perform the function of the Message Groomers 11, 12 in Figures 1 and 2.

In the preferred embodiment, the message is not stored before it reaches the message aggregator. This is known as operating in 'transaction mode' and means that the end to end transmission path is held open until, in this case, the message is accepted by the message aggregator. A failure to accept the message for any reason can then be negatively acknowledged back to the handset resulting in a 'message not sent' indication.

The SMS Routers can look inside the User Data part of the text message PDU (protocol description unit) and determine the TP_DA (Transfer protocol destination address) of the message. If this corresponds (e.g. by prefix matching) to a number range that is provisioned onto the message groomer as being a free service, then the message will not be billed in the normal way but will instead be groomed to the Message Aggregator. In a preferred embodiment this interface is over TCP/IP (Transmission Control Protocol/Internet Protocol). Typically a network will have multiple SMS Routers in the MO path, and all will groom free-text messages to the aggregator.

Preferably the aggregator is arranged as a fault tolerant platform or group of platforms, for example in a master-slave arrangement. The aggregator(s) themselves may periodically inform the SMS Routers which aggregator to use.

The aggregators have access to an address translation table, such as may be implemented as a lookup table, or a hashing database. Address translation converts the free dialled number into a delivery address for the message, together with an indication of the means or protocol required to reach that destination. For example the translated address might be an email address, or might be a telephone number such as a mobile number assigned to a data card. Alternatively, the translated destination might be an IP address reachable using the HTTP protocol. The message is then delivered to the translated address.

Preferably provisioned on to the aggregator is data indicative of rate or cost limits per unit time to be observed for one or more destinations. Before delivery, these limits are checked, for example by reference to message counters which for example can record the number of messages delivered to each destination per hour or per day, or can record the accumulated cost in the same period. According to the recipient's preferences, the free service can be temporarily suspended if these limits are exceeded. In the case of suspension of free delivery, the message is preferably negatively acknowledged by the Message Aggregator, which will result in a negative acknowledge being sent back to the handset, resulting in a 'message not sent' indication. Furthermore if this occurs, preferably a message is promptly generated and sent (but not more than once per CLI per configurable time period) to the originator indicating that the free service is temporarily unavailable and offering a normal chargeable number that can be used instead. The replacement number is preferably the same as the free number with the leading zero dropped, or some similar minor change.

This then allows the message to be routed via the same aggregator path to the destination, but invokes normal charging at the SMS Router.

In a preferred embodiment modification of, for example, 0800 is standardised into an alternative prefix such as 800 or *0800 that is charged for messages at a normal rate, allowing both free voice and paid-for messages to reach the same destination organisation. In this way customers can use a previously known voice freephone number for sending a paid-for message even in networks that do not implement 'Freetext' messaging as described above. Also the paid-for prefix can be used on occasions where a Freetext service is unavailable to a given destination due to usage criteria blocking further messages.

In the case of email delivery, the message would be converted to SMTP (simple mail transfer protocol) format and delivered over the Internet. In the case of translation to a mobile telephone number, the message may be dispatched to an SMS Router, which will query an HLR (home location register) to determine delivery parameters and then deliver the message in mobile terminated format.

Embodiments of the invention would most probably be initially rolled out in a region according to Figure 1, and then when all or most of the region's operators had a working service, a migration to Figure 2 could take place.

Figure 2 has the advantage that thresholds and limits on traffic, such as to limit an end customer's exposure to call charges, may be applied centrally across traffic from all operators, thus providing better control for the end customer. In contrast limits applied in Figure 1 must be applied individually to each network, and so only apply an approximation to the desired limiting behaviour.

Similar techniques to those described here can be applied to other characteristic destination number ranges, other than free ones. For example in many countries, fixed line voice numbers or premium rate voice numbers are readily identifiable by their first few digits. These can be identified for text destinations by the described apparatus and routed via an aggregator for delivery to corresponding translated destinations. This allows text and voice services to run alongside each other on the same numbers for the selected number ranges.

In so far as the embodiment(s) of the invention described above may be implemented, at least in part, using software controlled processing apparatus, it will be appreciated that a computer program providing such software control and a storage medium by which such a computer program is stored are envisaged as aspects of the invention.

## Claims

1. A telecommunications services apparatus comprising: a message grooming means and a message aggregation means, wherein the message grooming means is operable to receive a message from a message originator and to determine whether or not the message should be free of charge to the originator based on an analysis of a destination address of the message, and if it is determined that the received message should be free of charge to the originator, to direct the message to the message aggregation means, wherein the message aggregation means is operable to receive the message from the message grooming means, to determine from the message destination address a corresponding delivery address for the message, to create a charging information record such that the intended message recipient may subsequently be charged for communication of the message, and to initiate delivery of the message to the determined delivery address.

2. A telecommunications services apparatus according to claim 1, wherein the message aggregation means is further operable to receive messages from further message grooming means, the further message grooming means also being operable to determine whether a received message should be free of charge to the originator based on an analysis of the destination address of the message, and if it is determined that the received message should be free of charge to the originator, to direct the message to the message aggregation means.

3. A telecommunications services apparatus according to claim 2, wherein the message aggregation means is operable to receive messages from message grooming means in different telecommunications networks.

4. A telecommunications services apparatus according any of claims 1 to 3, wherein the message aggregation means is provided with data indicative of a usage rate or cost limit per unit time interval for a recipient, and to suspend delivery of messages to the recipient which are free of charge to the originator if the usage rate or cost limit per unit time interval has been exceeded.

5. A telecommunications services apparatus according any of claims 1 to 4, wherein the message communication is executed in a transaction mode and the apparatus is operable to generate a negative acknowledgment to the originator in the event there is a failure to accept the message by the message aggregation means.

6. A telecommunications services apparatus according to claim 5, wherein the negative acknowledgment includes an indication of an alternative destination address to which the originator may send a message.

7. A telecommunications services apparatus according to claim 6, wherein the alternative destination address corresponds to the first mentioned destination address with a modified pre-fix.

8. A telecommunications system allowing communication of a message between an originator and a recipient, wherein messages sent by the originator are attributed a destination address in accordance with the desired recipient, and wherein a characteristic of the destination address is used by the system to determine whether the originator or the recipient is to be charged for the communication of the message.

9. A telecommunications system according to claim 8, wherein the system is operable to translate a destination address attributed to a message by the originator to a delivery address suitable for delivery of the message to the recipient in the event that the destination address attributed to the message by the message originator includes a characteristic indicating that the recipient is to be charged for the communication of the message within.

10. A telecommunications system according to claim 8 or claim 9, wherein the system is further operable to limit the number of messages delivered and charged to the recipient so as not to exceed a predetermined maximum number of chargeable deliveries in any given time period.

11. A method for managing message communication in a telecommunications system, the method comprising: receiving a message from a message originator, the message having a destination address associated with an intended recipient attributed thereto, determining that communication of the message within the telecommunications system should be free of charge to the originator based on an analysis of the destination address, creating a charging information record such that the intended recipient of the message may subsequently be charged for communication of the message, determining from the destination address a corresponding delivery address for the message, and initiating delivery of the message to the determined delivery address.

12. A method for managing message communication in a telecommunications system according to claim 11, further comprising checking whether a usage rate or cost limit per unit time interval for the recipient has been exceeded, and is so, suspending delivery of messages to the recipient which are free of charge to the originator.

13. A method for managing message communication in a telecommunications system according to claim 11 or 12, wherein message communication is executed in a transaction mode, and the method further comprises generating a negative acknowledgment to the originator of the message in the event there is a failure to deliver the message.

14. A method for managing message communication in a telecommunications system according to claim 13, wherein the negative acknowledgment includes an indication of an alternative destination address to which the originator may send a message.

15. A method for managing message communication in a telecommunications system according to claim 14, wherein the alternative destination address corresponds to the first mentioned destination address with a modified pre-fix.
